# EUROPEAN PATENT SPECIFICATION

(11) **EP 0 697 451 B1**
(45) Date of publication and mention of the grant of the patent: **06.05.1998**
(21) Application number: 95110495.9
(22) Date of filing: 05.07.1995
(51) Int. Cl.: C09J 153/02

(54) **Hot melt adhesive compositions**
Schmelzklebstoffzusammensetzungen
Compositions adhésives thermofusibles

(30) Priority: 18.08.1994 JP 194119/94
(43) Date of publication of application: 21.02.1996
(73) Proprietor: National Starch and Chemical Investment Holding Corporation, Wilmington, Delaware 19809 (US)
(72) Inventor: Sugie, Masaharu, Osaka-shi, Osaka 534 (JP)
(74) Representative: Hagemann, Heinrich, Dr.rer.nat., Dipl.-Chem.

(56) References cited:
- EP-A- 0 171 225
- DATABASE WPI Section Ch, Week 8544 Derwent Publications Ltd., London, GB; Class A81, AN 85-273788 'hot melt adhesive...' & JP-A-60 186 577 (JAPAN SYNTHETIC RUBBER) , 24 September 1985
- DATABASE WPI Section Ch, Week 8601 Derwent Publications Ltd., London, GB; Class A12, AN 86-003075 'aromatic vinyl conjugated diene block copolymer used as hot melt adhesive' & JP-A-60 228 521 (JAPAN SYNTHETIC RUBBER) , 13 November 1985

## Description

The present invention relates to a hot melt adhesive composition useful in disposable products such as sanitary napkins.

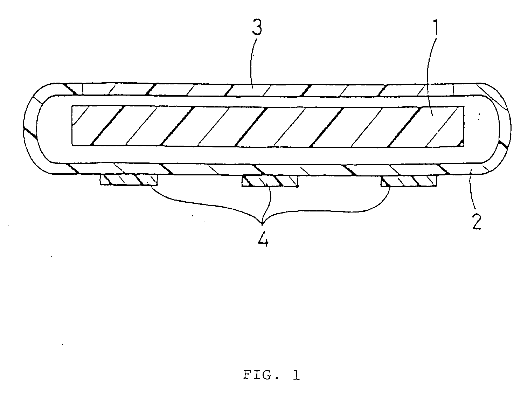

Generally, a disposable product such as a sanitary napkin has a structure shown in Figure 1. A leak-prevention film 2 is provided to surround an absorbent panel 1. A liquid-permeable sheet is designated by 3. On the leak-prevention film 2, a hot melt adhesive layer 4 for the purpose of prevention of moving by bonding thereof on a fabric of shorts is suitably provided. Not only an adhesive property to a shorts fabric, but also no adhesive transfer on a shorts fabric occurred when getting rid of a sanitary napkin is required as a fundamental capability for a material forming the hot melt adhesive layer 4. For this reason, styrenic block copolymer based hot melt adhesive wherein a great amount of oil is added to a base polymer of a hydrogenated styrenebutadiene-styrene copolymer (SEBS) is presently employed.

However, there is a problem caused that the oil bleeds and stains a shorts fabric since the SEBS-based styrenic block copolymer based hot melt adhesive contains a great amount of oil. Further, if an atmosphere temperature rises to a body temperature when using the sanitary napkin in which the styrenic block copolymer based hot melt adhesive layer is formed, the hot melt adhesive softens so that its adhesion to a shorts fabric rises and at the same time cohesive strength deteriorates. As a result, there is another problem that the sanitary napkin slips or hot melt adhesive partly remains on the shorts fabric (adhesive transfer) when getting rid thereof after usage. To solve this problem, for example, it is a current situation that the oil content is adjusted. In addition, instead of SEBS-based hot melt adhesive, possibility of employing styrene-isoprene-styrene (SIS) block copolymer based hot melt adhesive or styrene-butadiene-styrene (SBS) block copolymer based hot melt adhesive is examined. However, when adhesive property is strengthened by employing the SIS-based or SBS-based adhesive, there is a problem caused that hot melt adhesive partly remains on a sanitary napkin, while when adhesive property is weakened, there is a problem caused that a sanitary napkin moves. Thus, it is real circumstances that adhesive property and adhesive transfer property cannot be well balanced even if the SIS-based or SBS-based hot melt adhesive is employed.

JP-A-60 186 577 discloses a hot melt adhesive composition comprising an elastomer of the formula A-B-A, whereby A is a polymer block of vinyl aromatic compound and B is a copolymer of conjugated diene and vinyl aromatic compound.

An objective of the present invention is to provide a hot melt adhesive composition which prevents objects (shorts and the like) from being stained by oil-bleeding, which is superior in a stable adhesive property at a temperature from a normal temperature to a body temperature, and which also has high cohesive strength.

Accordingly, a hot melt adhesive composition according to the present invention comprises as major components:
(a) a synthetic rubber which is a block copolymer represented by the general formula (1):

   A-B-A (1)

   wherein A denotes polystyrene and B denotes a styrene-butadiene random copolymer, the content of styrene is 10 to 50% by weight based on the entire block copolymer, and the content of styrene in moiety B in the above formula (1) is 1 to 20% by weight based on the entire block copolymer;
(b) a tackifying resin; and,
(c) a plasticizing oil, wherein said composition contains, based on the entire composition, the component (a) in an amount from 10-50%, the component (b) in an amount from 25-70%, and the component (c) in an amount of 25% or less.

Thus, we made much effort in a series of studies to develop a hot melt adhesive composition having superior adhesive and cohesive strength, which prevents oil bleeding. As a result, it is found that our objective can be achieved by using a synthetic rubber which is represented by the general formula (1) shown above wherein a content ratio of styrene in styrene-butadiene random copolymer as moiety B in the general formula (1) based on the entire block copolymer is set within a specified scope and that said styrene comprises a block copolymer in which styrene is set at a specific ratio. As discussed herein, the expression "comprising as major components" is used to intend to include a rubber consisting only of such major components.

The present invention is further detailed below.

The hot melt adhesive composition according to the present invention can be obtained specifically by using a synthetic rubber (component a), tackifying resin (component b) and plasticizing oil (component c).

The synthetic rubber (component a) is a block copolymer represented by the general formula (1) shown below:

A-B-A (1)

wherein A denotes polystyrene and B denotes a styrene-butadiene random copolymer.

In the block copolymer (component a), the content of styrene in styrene-butadien random copolymer as moiety B in the general formula (1) should be 1 to 20% by weight based on the entire block copolymer (hereinafter indicated merely as %), preferably 2 to 10%, more preferably 3 to 7%. Thus, a content of styrene in moiety B less than 1% provides deterioration in cohesive strength and adhesive transfer, while that exceeding 20% causes significant reduction in adhesion. It is further preferable that the content of styrene is 10 to 50% based on the entire block copolymer (component a). Thus, a content of styrene less than 10% based on the entire component a causes reduction in cohesive strength and adhesive transfer, while that exceeding 50% causes reduction in adhesive strength.

As the tackifying resin (component b) used together with component a, any of those employed conventionally may be employed. For example, coumarone-indene resins, phenol-formaldehyde resins, modified xylene resins, terpene-phenol resins, terpene resins, hydrogenated terpene resins, polybutene, polyisobutylene, petroleum resins, hydrogenated petroleum resins, hydrogenated rosins, hydrogenated rosin esters and styrene resins. In addition, it is further preferable to employ hydrogenated one as the tackifying resin from a viewpoint of heat stability. These may be employed independently or in combination.

The placticizing oil (component c) employed together with components a and b may also be any of those used conventionally. For example, paraffin-based oils, naphthene-based oils and oils containing aromatic components in large amounts may be employed independently or in combination.

In addition to components (a) to (c) discussed above, the hot melt adhesive composition according to the present invention may contain various additives if desired such as hindered phenol stabilizers for the purpose of improvement in resistance against heat, oxidation and lights as well as ultraviolet absorbers.

The hot melt adhesive composition according to the present invention may be prepared by a method described below as an example. Thus, components (a) to (c) and other additives if desired in suitable amounts are admixed and melted while heating.

The admixture contains, based on the entire hot melt adhesive composition, component (a) in an amount from 10 to 50%, component (b) in an amount from 25 to 70%, and component (c) in an amount of 25% or less. When component (a) is less than 10%, the cohesion capability deteriorates, while component (a) is over 50%, the adhesion capability is reduced significantly and the melt index becomes high, resulting in difficulty in painting. When component (b) is less than 25%, the adhesion strength around a body temperature is reduced, while when component b is over 70%, the adhesion capability deteriorates. When component (c) is over 25%, the cohesive strength is reduced significantly.

As described above, the inventive hot melt adhesive composition comprises a base polymer which is a synthetic rubber (component a) consisting of a block copolymer represented by the general formula (1) shown above, in which moiety B is a styrene-butadiene random copolymer, and further each of the styrene content in the styrene-butadiene random copolymer as moiety B in the general formula (1) and in the entire block copolymer is set at a specific ratio, resulting in prevention of oil-bleeding, deterioration of cohesion strength from an ordinary temperature to a body temperature and adhesive transfer. Furthermore, adhesive strength can be improved so that moving on objectives can be prevented.

As described above, the inventive hot melt adhesive composition utilizes a synthetic rubber (component a) consisting of a block copolymer represented by the general formula (1) shown above, and, in addition, moiety B in the formula (1) is a styrene-butadiene random copolymer wherein the styrene content is set at a specific ratio. Accordingly, if the obtained hot melt adhesive composition is employed, for example, for disposable products such as sanitary napkins for the purpose of prevention of moving, objects are not stained by oil-bleeding, and moreover deterioration of cohesive strength caused by softening around a body temperature in usage are prevented so that moving or adhesive transfer can be prevented. Thus, the inventive hot melt adhesive has a superior adhesive property and causes no troubles such as moving on objects or adhesive transfer. Further, compared with conventional SEBS-based ones, this hot melt adhesive composition is available at a reasonable price, resulting in lowering cost. Accordingly, the hot melt adhesive composition is most suitable for adhesive employed to prevent moving of disposable products such as sanitary napkins or disposable diapers attached with each cover thereof.

### [Brief description of the drawings]

### [Figure 1]

Figure 1 shows a sectional view of a sanitary napkin.

The present invention is further described in the examples together with the comparatives shown below.

Prior to embodying the inventive examples, synthetic rubbers a to d listed in Table 1 shown below were provided. Synthetic rubbers a to d are represented by the general formula (2) shown below:

A-B-A (2)

wherein A denotes polystyrene and B denotes a styrene-butadiene random copolymer.

**[Table 1]**

| | Synthetic rubber | | | |
|---|---|---|---|---|
| | a | b | c | d |
| Content of styrene based on the entire synthetic rubber (%) | 10 | 30 | 50 | 55 |
| Content of styrene in moiety B based on the entire synthetic rubber (%) | 2 | 5 | 10 | 20 |

### [Examples 1 to 9, Comparative 1]

The components were incorporated and admixed as shown below in Tables 2 to 4. After melting while heating, the mixtures were cooled to solidify to yield respective hot melt adhesive compositions.

**[Table 2]**

| (Parts by weight) | | | | |
|---|---|---|---|---|
| | | Example | | |
| | | 1 | 2 | 3 |
| Synthetic rubber | a | 10 | - | - |
| | b | - | 10 | - |
| | c | - | - | 10 |
| Tackifying resin | *1 | 70 | 65 | 70 |
| Plasticizing oil | *2 | 20 | 25 | 20 |

| | | | | |
|---|---|---|---|---|
| *1: Hydrogenated alicyclic petroleum tackifying resin | | | | |
| *2: Paraffinic oil | | | | |

**[Table 3]**

| (Parts by weight) | | | | |
|---|---|---|---|---|
| | | Example | | |
| | | 4 | 5 | 6 |
| Synthetic rubber | a | 30 | - | - |
| | b | - | 30 | - |
| | c | - | - | 30 |
| Tackifying resin | *1 | 60 | 50 | 40 |
| Plasticizing oil | *2 | 10 | 20 | 30 |

| | | | | |
|---|---|---|---|---|
| *1: Hydrogenated alicyclic petroleum tackifying resin | | | | |
| *2: Paraffinic oil | | | | |

**[Table 4]**

| (Parts by weight) | | | | | |
|---|---|---|---|---|---|
| | | Example | | | Comparative 1 |
| | | 7 | 8 | 9 | |
| Synthetic rubber | a | 50 | - | - | - |
| | b | - | 50 | - | - |
| | c | - | - | 50 | - |
| | d | - | - | - | 50 |
| Tackifying resin | *1 | 40 | 45 | 30 | 30 |
| Plasticizing oil | *2 | 10 | 5 | 20 | 20 |

| | | | | | |
|---|---|---|---|---|---|
| *1: Hydrogenated alicyclic petroleum tackifying resin | | | | | |
| *2: Paraffinic oil | | | | | |

### [Comparative 2]

As a synthetic rubber, a block copolymer e represented by the general formula (3) shown below:

A-B-A (3)

wherein A denotes polystyrene and B denotes butadiene, was provided. The components were incorporated and admixed as shown below in Table 5. After melting while heating, the mixture was cooled to solidify to yield a hot melt adhesive composition.

**[Table 5]**

| (Parts by weight) | | |
|---|---|---|
| | | Comparative 2 |
| Block copolymer e | | 50 |
| Tackifying resin | *1 | 40 |
| Plasicizing oil | *2 | 10 |

| | | |
|---|---|---|
| *1: Hydrogenated alicyclic petroleum tackifying resin | | |
| *2: Paraffinic oil | | |

The hot melt adhesive compositions of the examples and comparative thus obtained were evaluated for adhesive transfer, adhesive strength and heat stability. The results are shown in Tables 6 and 7. The methods of the evaluations are described below.

### [Adhesive transfer]

A hot melt adhesive composition, which had been coated beforehand on a polyethylene terephthalate film in 50 µm thick, was stuck to a cotton fabric in 2.54 cm wide x 20 cm long. After this was allowed to stand at 40°C under a load of 1 kg for 8 hours, the fabric was peeled off. The results were judged as Ⓞ when no adhesive transferred, ○ when almost no adhesive transferred, △ when adhesive slightly transferred, and × when adhesive obviously transferred.

### [Adhesive strength]

At 20°C, the hot melt adhesive composition applied in the thickness of 50 µm to a polyethylene terephthalate film was adhered to a cotton fabric for shorts in a area of 2.54 cm x 20 cm to form a test piece. The test piece was allowed to stand at 40°C while loaded with 1 kg for 6 hours, and then subjected to the determination of peeling strength at 20°C by using a tensile test machine (in compliance with JIS Z-0237).

### [Heat stability]

The color tone of the hot melt adhesive composition which had been allowed to stand for 72 hours at 180°C was evaluated visually. The results were judged as Ⓞ when the color was completely colorless or white, ○ when almost colorless or white, △ when colored slightly, and × when colored completely.

**[Table 6]**

| | Example | | | | | | |
|---|---|---|---|---|---|---|---|
| | 1 | 2 | 3 | 4 | 5 | 6 | 7 |
| Adhesive transfer | ○ | ○ | Ⓞ | ○ | Ⓞ | Ⓞ | Ⓞ |
| Adhesive strength | 180 | 200 | 240 | 250 | 280 | 200 | 240 |
| Heat stability | ○ | ○ | ○ | Ⓞ | Ⓞ | Ⓞ | Ⓞ |

**[Table 7]**

| | Example | | Comparative | |
|---|---|---|---|---|
| | 8 | 9 | 1 | 2 |
| Adhesive transfer | Ⓞ | Ⓞ | ○ | △ |
| Adhesive strength | 200 | 180 | 20 | 180 |
| Heat stability | Ⓞ | Ⓞ | Ⓞ | ○ |

As evident from Tables 6 and 7, the comparative 1 is superior in adhesive transfer and heat stability, but inferior in adhesive strength, while the comparative 2 is superior in adhesive strength and heat stability, but inferior in adhesive transfer. All examples exhibited excellent resistance against plasticizers, excellent adhesive strength and excellent heat stability.

## Claims

1. A hot melt adhesive composition comprising as major components:
(a) a synthetic rubber which is a block copolymer represented by the general formula (1):
A-B-A (1)
wherein A denotes polystyrene and B denotes a styrene-butadiene random copolymer, the content of styrene is 10 to 50% by weight based on the entire block copolymer, and the content of styrene in moiety B in the above formula (1) is 1 to 20% by weight based on the entire block copolymer;
(b) a tackifying resin; and,
(c) a plasticizing oil, wherein said composition contains, based on the entire composition, the component(a)in an amount from 10 to 50%, the component (b) in an amount from 25 to 70%, and the component (c) in an amount of 25% or less.

2. A hot melt adhesive composition according to Claim 1 wherein the tackifying resin as the component (b) is hydrogenated.

## Patentansprüche

1. Schmelzklebstoffzusammensetzung, die als Hauptbestandteile umfaßt:
(a) einen synthetischen Kautschuk, der ein durch die allgemeine Formel (1) dargestelltes Blockcopolymer ist:
A-B-A (1),
worin A Polystyrol und B ein statistisches Styrol-Butadien-Copolymer bedeutet, wobei der Styrolgehalt 10 bis 50 Gew.-%, bezogen auf das gesamte Blockcopolymer und der Styrolgehalt in Komponente B in der obigen Formel (1) 1 bis 20 Gew.-%, bezogen auf das gesamte Blockcopolymer, ist:
(b) ein klebrigmachendes Harz und
(c) ein plastifizierendes Öl,
wobei die Zusammensetzung, bezogen auf die gesamte Zusammensetzung, den Bestandteil (a) in einer Menge von 10 bis 50%, den Bestandteil (b) in einer Menge von 25 bis 70% und den Bestandteil (c) in einer Menge von 25% oder weniger enthält.

2. Schmelzklebstoffzusammensetzung nach Anspruch 1, in der das klebrigmachende Harz als Bestandteil (b) hydriert ist.

## Revendications

1. Composition d'adhésif thermofusible comprenant comme constituants principaux :
(a) un caoutchouc synthétique qui est un copolymère séquencé répondant à la formule générale (1)
A-B-A (1)
dans laquelle A désigne le polystryrène et B désigne un copolymère statistique styrène-butadiène, la teneur en styrène est de 10 à 30 % en poids par rapport au copolymère séquencé entier, et la teneur en styrène dans la partie B de la formule (1) ci-dessus est de 1 à 20 % en poids par rapport au copolymère séquencé entier ;
(b) une résine apportant de la pégosité ; et
(c) une huile plastifiante,
dans laquelle cette composition contient, par rapport à la composition entière, le constituant (a) dans une proportion de 10 à 50 %, le constituant (b) dans une proportion de 25 à 70 % et le constituant (c) dans une proportion de 25 % ou moins.

2. Composition d'adhésif thermofusible selon la revendication 1, dans laquelle la résine apportant de la pégosité utilisée comme constituant (b) est hydrogénée.
